# EUROPEAN PATENT SPECIFICATION

(11) **EP 3 894 847 B1**
(45) Date of publication and mention of the grant of the patent: **14.02.2024**
(21) Application number: 19842838.5
(22) Date of filing: 29.11.2019
(51) Int. Cl.: G01N 27/04

(54) **METHOD AND APPARATUS FOR CHECKING THE ELECTRICAL CONDUCTIVITY OF A TYRE BEING PROCESSED**
VERFAHREN UND VORRICHTUNG ZUR ÜBERPRÜFUNG DES ELEKTRISCHEN LEITFÄHIGEIT EINES REIFENS BEI DESSEN BEARBEITUNG
PROCEDE ET DISPOSITIF DE CONTROLE DE LA CONDUCTIBILITE ELECTRIQUE D'UN PNEU EN USINAGE

(30) Priority: 11.12.2018 IT 201800010966
(43) Date of publication of application: 20.10.2021
(73) Proprietor: Pirelli Tyre S.P.A., 20126 Milan (IT)
(72) Inventor: D'ORIA, Francesco, 20133 Milan (IT); CAPURSO, Martino, 20132 Milan (IT); SIMONATO, Giovanni, 10073 Ciriè (TO) (IT); ANFOSSI, Andrea, 20126 Milan (IT)
(74) Representative: PGA S.p.A.
(86) International application number: PCT/IB2019/060311
(87) International publication number: WO 2020/121105

(56) References cited:
- EP-A1- 1 887 367
- US-A1- 2002 166 372
- US-A1- 2018 264 897

## Description

### Technical field of the invention

The present invention relates to a method and an apparatus for checking the electrical conductivity of a tyre being processed. The present invention falls within the field of processes and apparatuses for building tyres for vehicle wheels.

A tyre for vehicle wheels generally comprises a carcass structure comprising at least one carcass ply having end flaps engaged with respective annular anchoring structures. A belt structure is associated in a radially outer position to the carcass structure, comprising one or more belt layers, arranged in radial superposition with respect to each other and with respect to the carcass ply, having textile or metallic reinforcing cords with crossed orientation and/or substantially parallel to the circumferential development direction of the tyre. A tread band is applied in a position radially outer to the belt structure, also made of elastomeric material like other semi-finished products making up the tyre. The assembly of at least said belt structure and said tread band form the crown structure of the tyre. Respective sidewalls of elastomeric material are further applied on the lateral surfaces of the carcass structure, each extending from one of the lateral edges of the tread band up at the respective annular anchoring structure to the beads. In "tubeless" tyres, the carcass ply is internally coated by a preferably butyl-based layer of elastomeric material, usually called "liner" having optimal airtight characteristics and extending from one to the other of the beads.

The production cycles of a tyre provide for a building process in which the various structural components of the tyre are made and/or assembled on one or more drums. The built green tyres are then transferred to a moulding and vulcanisation line where a moulding and vulcanisation process is carried out to define the structure of the tyre according to a desired geometry and tread pattern.

### Definitions

By "tyre being processed", when not otherwise specified, it is meant a moulded and vulcanised tyre still associated with its forming drum, or a green tyre, or a semi-finished product comprising one or more components of the tyre arranged circumferentially around an axis of rotation of said tyre. Such components may be, for example, elongated elements, strips or strip-like elements wound one or more times around said axis of rotation, usually comprising elastomeric material, with or without reinforcing elements, such as for example metal and/or textile and/or hybrid threads.

The terms "radial" and "axial" and the expressions "radially inner/outer" and "axially inner/outer" are used referring to a direction perpendicular and a direction parallel to the axis of rotation of the tyre, respectively.

The terms "circumferential" and "circumferentially" are instead used with reference to the annular development direction of the tyre.

### Prior art

Document KR101462429 discloses an apparatus for measuring the electrical resistance of a semi-finished product intended to define a tread band. The apparatus comprises an upper roller and a lower roller of conductive material arranged respectively on an upper side and on a lower side of the semi-finished product. A circuit for measuring the electrical resistance is connected to the upper roller and the lower roller.

Document WO 2018/099704 discloses a method for producing a tread band. The method comprises: extruding the tread band and an electrically conductive strip extending across the band from an outer side to an inner side thereof. The method provides for measuring an electrical resistance of the electrically conductive strip between the outer side and the inner side of the strip by an external wheel and a support roller constituting respectively an outer electrode and an inner electrode. The method provides for emitting an alarm signal if the measured resistance is greater than a predefined maximum resistance.

Document EP1083425 discloses a method and a device for checking the components of a green tyre, such as a continuous extruded strip constituting a green tread band. The device comprises a control station arranged along a conveyor and comprising an upper terminal and a lower terminal electrically and respectively connectable to an upper surface and to a lower surface of the component. The terminals are rollers of conductive material.

### Summary

Modern tyres, even the best performing ones with a tread containing a high percentage of silica that gives them good handling but high electrical resistance, must allow discharging to earth the electrostatic charge due to the difference in potential between the vehicle and the ground, to avoid the generation of discharges that could cause serious damage, for example during refuelling, or even just to avoid annoying shocks to people who touch the vehicle or even interference to the electronic equipment on board.

In this context, the Applicant has felt the need to improve the technical solutions of the type illustrated in KR101462429, WO2018/099704, and EP1083425.

The Applicant has observed that the solutions illustrated in the aforementioned documents allow the verification of only one extruded component, such as the tread band alone, and therefore require that each extrusion line be provided with a dedicated device for measuring the electrical conductivity/resistance.

The Applicant has also observed that the solutions of the type shown above do not allow conductivity/electrical resistance verifications for those components obtained in modern building plants where a wide use is made of: continuous elongated elements made of elastomeric material only or comprising metal and/or textile and/or hybrid cords, wound on a building drum by means of juxtaposed and/or at least partially superposed turns to form one or more components, and/or strip-like elements obtained by means of lengths of a tape of elastomeric material cut to size comprising metal and/or textile and/or hybrid cords, said strip-like elements being then placed side by side on a building drum to form one or more components.

The Applicant has therefore felt the need to be able to control the electrical conductivity of tyres for vehicle wheel starting from the components of the same tyres being processed, without appreciably affecting the building cycle time and without having to drastically modify the existing production machines and/or lines. More precisely, the Applicant has felt the need to perform such a check so as to be able to verify the electrical conductivity of a plurality of individual components or groups of components forming part of the green tyre at the end of building, improving the outcome of the conductivity tests carried out on the same at the end of building or after vulcanisation.

The Applicant has perceived that the necessary checking speed and completeness of the conductivity tests could be obtained by carrying out the check on one or more components of the tyre during the building thereof on one or more building drums.

Finally, the Applicant has found that by applying an electrode on a radially outer surface of a component or a group of components of a tyre being processed wound on a building drum and by closing an electrical circuit with the aforementioned building drum it is possible to determine the conductivity of the aforementioned component/group of components of the tyre being processed.

According to a first aspect, the present invention relates to a method for checking the electrical conductivity of a tyre being processed according to claim 1.

According to a second aspect thereof, the present invention relates to a process for building tyres for vehicle wheels according to claim 9.

According to a third aspect thereof, the present invention relates to an apparatus for building tyres for vehicle wheels according to claim 10.

The Applicant believes that the present invention allows improving the verification of the electrical conductivity of the tyres in terms of completeness, precision, repeatability, accuracy and speed.

The Applicant has verified that the present invention allows the electrical conductivity of individual components or groups of components forming part of the green tyre to be tested at the end of the building and in this way identify and possibly reject defective components or groups of components before the complete building of the tyre itself.

The Applicant also believes that such check of the electrical conductivity may also be carried out when the tyre components are obtained by winding said continuous elongated elements by juxtaposed and/or at least partially superposed turns on a building drum, or by approaching said strip-like elements on said building drum, as in modern tyre building processes.

In particular, the Applicant has verified that the present invention allows verifying the presence of conductive circuits in the individual components, in the groups of components and in the green tyre, such as to allow the electrostatic charge to be dissipated through the tyre itself, more particularly through conductive circuits that from a radially outer surface of the tread band branch off to the beads configured for being placed in contact with a rim of the vehicle wheel.

The Applicant has also verified that the present invention allows conductivity checks to be carried out without the need to substantially modify the building steps and/or the devices dedicated to building and without excessively increasing the costs relating thereto. With a single device, the present invention allows checking various components or groups of components and to do so during building.

The Applicant also believes that the present invention allows integrating such a verification during building and performing it on a high percentage of tyres or on all the tyres produced.

The Applicant also believes that the present invention allows improving the quality of the tyres produced, with particular reference to their conductive properties, so as to ensure maximum safety to the end user in terms of dissipation of the electrostatic charge of the vehicle.

The present invention, in at least one of the above aspects thereof, can exhibit one or more of the following preferred features.

Preferably, it is provided to rotate the building drum together with said at least one component around a central axis of the building drum and to generate the voltage and determine the electrical resistance while the building drum rotates together with said at least one component.

The Applicant has verified that in this way it is possible to check the component along its entire circumferential development by using devices (such as the motor and the building drum) used for building the tyre.

Preferably, it is provided to generate the voltage and determine the electrical resistance after said at least one component has been wound around the building drum. Once the component has been deposited, the electrical resistance is determined.

Alternatively, it is provided to generate the voltage and determine the electric resistance while said at least one component is wound around the building drum. In this variant, the electrode is applied against a portion of the component just deposited on the building drum while a remaining part of said component is still to be wound around said building drum.

Preferably, depositing components of a tyre being processed around at least one building drum comprises: winding one of the components by 360° around the building drum until a head mates with a tail of said component and said head is joined to said tail.

Preferably, depositing components of a tyre being processed around at least one building drum comprises: winding one of the components in axially juxtaposed and/or at least partially axially superposed turns around the building drum several times.

Preferably, said at least one component comprises a tread band.

Preferably, said at least one component comprises a belt structure.

Preferably, said at least one component comprises a belt structure placed in contact with the building drum and a tread band located in a position radially outer to the belt structure.

The tread band is a critical component of the tyre, since it is thick, formed by non-conductive elastomeric material and does not contain metal reinforcements. The Applicant believes that if the tread band and/or the assembly comprising the belt structure and the tread band have one or more conductive paths extending from a radially outer surface of the band to the building drum, the conductivity of the tyre will fall with high probability within the current legal regulation.

Preferably, said at least one component comprises a carcass structure.

Preferably, the carcass structure comprises at least one carcass ply having end flaps engaged or engageable to respective annular anchoring structures.

Preferably, said at least one component comprises a layer of air-impermeable elastomeric material which covers the carcass structure in a radially inner position. Preferably, said belt structure is located in a position radially outer to the carcass structure.

Preferably, sidewalls of elastomeric material are applied to lateral surfaces of the carcass structure, each extending from lateral edges of the tread band up to a respective annular anchoring structure.

Preferably, said at least one component comprises a conductive layer located in a position radially inner to the tread band and preferably radially interposed between the belt structure and the tread band.

Preferably, said at least one component comprises an under-belt insert radially arranged between the tread band and the carcass structure and axially arranged between the conductive layer and the respective sidewall.

Preferably, the tread band comprises a conductive insert configured for surfacing on the radially outer surface of said tread band.

Preferably, the conductive insert has an electrical conductivity greater than an electrical conductivity of the tread band or an electrical resistance lower than an electrical resistance of the tread band.

The conductive insert, when the tyre is mounted on the vehicle and if correctly made, is in contact with the ground and allows discharging the static electricity of the vehicle to the ground through the rim, the bead(s) and other conductive elements of the tyre which electrically connect the bead(s) to the conductive insert. Preferably, a conductive circuit between the tread band and the building drum comprises the conductive insert and preferably the conductive layer.

Preferably, a conductive circuit between the tread band and the building drum comprises the belt structure.

Preferably, a conductive circuit between the tread band and the building drum comprises the under-belt insert.

The method according to the invention allows checking the presence and/or correct position of the conductive insert in the tread band.

Preferably, the vulcanised elastomeric material relating to the conductive insert has an electrical resistivity less than or equal to 3*10³Ω*m at room temperature.

Preferably, the elastomeric material relating to the tread band has an electrical resistivity greater than or equal to 10⁴Ω*m at room temperature.

Preferably, the conductive insert completely passes through a thickness of the tread band.

Preferably, the conductive insert is electrically in contact with the belt structure. Preferably, the conductive insert extends over an entire circumferential extension of the tread band.

Preferably, the conductive insert is a continuous elongated element embedded in the tread band.

Preferably, the conductive insert is electrically in contact with the conductive layer. Preferably, the conductive insert is defined by a protuberance of the conductive layer.

Preferably, the electrode is located at an axial position provided for said conductive insert.

Preferably, the electrode is located at an axial position provided for a portion of the conductive insert which surfaces on the radially outer surface of the tread band.

Preferably, it is provided to generate the voltage and determine the electrical resistance for a measurement time greater than or equal to 2s.

Preferably, it is provided to generate the voltage and determine the electrical resistance for a measurement time of less than or equal to 30s.

Preferably, it is provided to generate the voltage and determine the electrical resistance for a measurement time greater than or equal to 2s.

Preferably, it is provided to generate the voltage and determine the electrical resistance for a measurement time less than or equal to 10s.

Preferably, it is provided to generate the voltage and determine the electrical resistance for a rotation angle of the building drum around the central axis greater than 270°.

Preferably, it is provided to generate the voltage and determine the electrical resistance for a rotation angle of the building drum around the central axis of less than or equal to 360°.

Preferably, it is provided to generate the voltage and determine the electrical resistance for one or more revolutions of the building drum around the central axis. Preferably, it is provided to generate the voltage and determine the electrical resistance for a fraction of a round angle described by the building drum around the central axis.

Preferably, during the generation of the voltage and the determination of the electrical resistance, the building drum is rotated with an angular speed greater than or equal to 50 rpm.

Preferably, during the generation of the voltage and the determination of the electrical resistance, the building drum is rotated with an angular speed less than or equal to 300 rpm.

Preferably, during the generation of the voltage and the determination of the electrical resistance, the building drum is rotated with an angular speed greater than or equal to 100 rpm.

Preferably, during the generation of the voltage and the determination of the electrical resistance, the building drum is rotated with an angular speed less than or equal to 200 rpm.

Preferably, during the generation of the voltage and the determination of the electrical resistance, the electrode rolls against the radially outer surface of said at least one component.

Preferably, during the generation of the voltage and the determination of the electrical resistance, the electrode slides against the radially outer surface of said at least one component.

Preferably, during the generation of the voltage and the determination of the electrical resistance, the electrode exerts against the radially outer surface of said at least one component a pressure greater than or equal to 0.5 bar.

Preferably, during the generation of the voltage and the determination of the electrical resistance, the electrode exerts against the radially outer surface of said at least one component a pressure less than or equal to 10 bar.

Preferably, it is provided to apply an auxiliary electrode against the building drum or against a portion electrically connected to the building drum and generate the voltage determining the electric resistance between said electrode and said auxiliary electrode.

Preferably, the auxiliary electrode is placed against a radially outer surface of the building drum free from said at least one component.

Preferably, the auxiliary electrode rolls against the radially outer surface of the building drum.

Preferably, the auxiliary electrode slides against the radially outer surface of the building drum.

Preferably, it is provided to obtain a curve of the electrical resistance/conductivity in the measurement time.

Preferably, it is provided to obtain a value of the electrical resistance/conductivity in the measurement time.

Preferably, it is provided to compare the curve and/or the value of the resistance/conductivity with a reference curve and/or a value and establish, through said comparison, whether the curve and/or the value determined is/are acceptable.

Preferably, the reference value of electrical resistance for a green tyre at room temperature below which the conductivity is acceptable is 2 GΩ.

Preferably, it is provided to emit notification or alarm signal if the determined curve and/or value of the electrical resistance is/are not acceptable.

Preferably, the building drum is at least partly made of conductive material, preferably metal.

Preferably, the radially outer surface of the building drum is made of a conductive material, preferably metal.

Preferably, in at least one operating position, the electrode is close to the radially outer surface of the building drum so as to rest against said at least one of the components of the tyre being processed.

Preferably, in at least one rest position, the electrode is spaced from the radially outer surface of the building drum.

Preferably, an actuator is connected to the electrode and is configured for moving the electrode between the operating position and a position spaced from the radially outer surface of the building drum.

Preferably, the actuator is configured for pushing the electrode against said at least one component when it is in the operating position.

Preferably, a weight is configured for pushing the electrode against said at least one component when it is in the operating position.

Preferably, said actuator is of the electric or pneumatic type.

Preferably, adjustment devices are configured for moving and axially positioning the electrode according to the type of tyre being processed.

Preferably, the device for checking the electrical conductivity comprises a frame, the electrode being mounted on said frame.

Preferably, the electrode is electrically isolated from the frame.

Preferably, manual or motorised adjustment devices are operatively arranged between the frame and the electrode and are configured for moving and positioning the electrode axially according to the type of tyre being processed and/or of building drum.

Preferably, the electrode comprises a wheel configured for rolling on said at least one component.

Preferably, a radially outer portion of the wheel is configured for rolling on said at least one component.

Preferably, the wheel is made of electrically conductive material.

Preferably, a radially outer portion of the wheel is made of electrically conductive material.

Preferably, the wheel or the radially outer portion of the wheel is made of metal, preferably of steel, preferably coated with nickel.

Preferably the wheel is connected to the meter by a sliding contact, preferably by brushes.

Preferably, the wheel has a diameter greater than or equal to 20mm.

Preferably, the wheel has a diameter less than or equal to 200mm.

Preferably, a profile of a radially outer portion of the wheel is arched. The arched profile ensures contact with the component even if it has concave surface areas.

Preferably, an axial width of the electrode, more preferably of the wheel, is greater than or equal to 5 mm.

Preferably, an axial width of the electrode, more preferably of the wheel, is less than or equal to 50mm.

Preferably, the wheel is idle to roll dragged by the building drum placed in rotation. Preferably, an axis of rotation of the wheel is parallel to the central axis of the building drum.

Preferably, the device for checking the electrical conductivity comprises an auxiliary electrode electrically connected or connectable to the building drum.

Preferably, the meter is operatively connected to the auxiliary electrode.

Preferably, the auxiliary electrode is electrically connected or connectable to the radially outer surface of the building drum.

Preferably, the auxiliary electrode is in a radially outer position to the radially outer surface of the building drum.

Preferably, the auxiliary electrode faces the radially outer surface of the building drum.

Preferably, in at least one operating position, the auxiliary electrode rests against an area of the radially outer surface of the building drum free from said at least one component.

Preferably, the auxiliary electrode comprises an auxiliary wheel configured for rolling on the radially outer surface of the building drum.

Preferably, the auxiliary wheel is made of electrically conductive material.

Preferably, a radially outer portion of the auxiliary wheel is made of electrically conductive material.

Preferably, the auxiliary wheel or the radially outer portion of the auxiliary wheel is made of metal, preferably of steel, more preferably made of nickel-coated steel. Preferably, the auxiliary wheel is connected to the meter by a sliding contact, preferably by brushes.

Preferably, the auxiliary wheel has a diameter greater than or equal to 50mm.

Preferably, the auxiliary wheel has a diameter less than or equal to 100mm.

Preferably, the auxiliary wheel is idle to roll dragged by the building drum placed in rotation.

Preferably, an axis of rotation of the auxiliary wheel is parallel to the central axis of the building drum.

Preferably, the auxiliary electrode is placed side by side with the electrode and axially spaced from said electrode.

Preferably, the wheel and the auxiliary wheel are mutually adjacent and mutually axially spaced.

Preferably, the auxiliary electrode is mounted on said frame.

Preferably, in at least one operating position, the auxiliary electrode rests against the radially outer surface of the building drum.

Preferably, in at least one rest position, the auxiliary electrode is spaced from the radially outer surface of the building drum.

Preferably, an auxiliary actuator is connected to the auxiliary electrode and is configured for moving the auxiliary electrode between the operating position and a position spaced from the radially outer surface of the building drum.

Preferably, an auxiliary actuator is configured for keeping the auxiliary electrode against the radially outer surface of the building drum when in the operating position.

Preferably, an auxiliary weight is configured for keeping the auxiliary electrode against the radially outer surface of the building drum when in the operating position.

Preferably, said auxiliary actuator is of the electric or pneumatic type.

Preferably, manual or motorised auxiliary adjustment devices are configured for moving and positioning the auxiliary electrode axially according to the type of tyre being processed and/or of building drum.

Preferably, the auxiliary adjustment devices are operatively arranged between the frame and the auxiliary electrode.

Preferably, the meter is an insulation tester.

Preferably, an electronic control unit is connected to the meter and is configured for making a comparison between the determined electrical resistance and the curve and/or the reference value of the electrical resistance.

Preferably, the electronic control unit is configured for emitting a notification or alarm signal if the determined curve and/or value of the electrical resistance is/are not acceptable.

Preferably, the electronic control unit is connected to the actuator and/or to the auxiliary actuator and/or to the adjustment devices and/or to the auxiliary adjustment devices.

Preferably, the electronic control unit is configured for checking the positions of the electrode and/or of the auxiliary electrode.

Preferably, the electronic control unit is configured for adjusting the electrode pressure against the radially outer surface of said at least one component.

Further features and advantages will become more apparent from the detailed description of a preferred but non-exclusive embodiment of a method and a device for checking the electrical conductivity of a tyre being processed according to the present invention.

### Description of the drawings

Such description is given hereinafter with reference to the accompanying drawings, provided only for illustrative and, therefore, non-limiting purposes, in which:
- figure 1 is a partial perspective view of an apparatus for building tyres provided with a device for checking the electrical conductivity of the tyres according to the present invention;
- figure 2 is a front view of the apparatus of figure 1;
- figure 3 is a side elevation view of a variant of the apparatus of figures 1 and 2;
- figure 4 is a partially sectional enlargement of the view of figure 2;
- figure 5 is a front view of a further variant of the apparatus of the preceding figures;
- figure 6 illustrates a graph obtained with the device for checking the electrical conductivity of the tyres according to the present invention;
- figure 7 is a radial half-section of a tyre whose components have been checked in the apparatus of figures 1 - 5.

### Detailed description

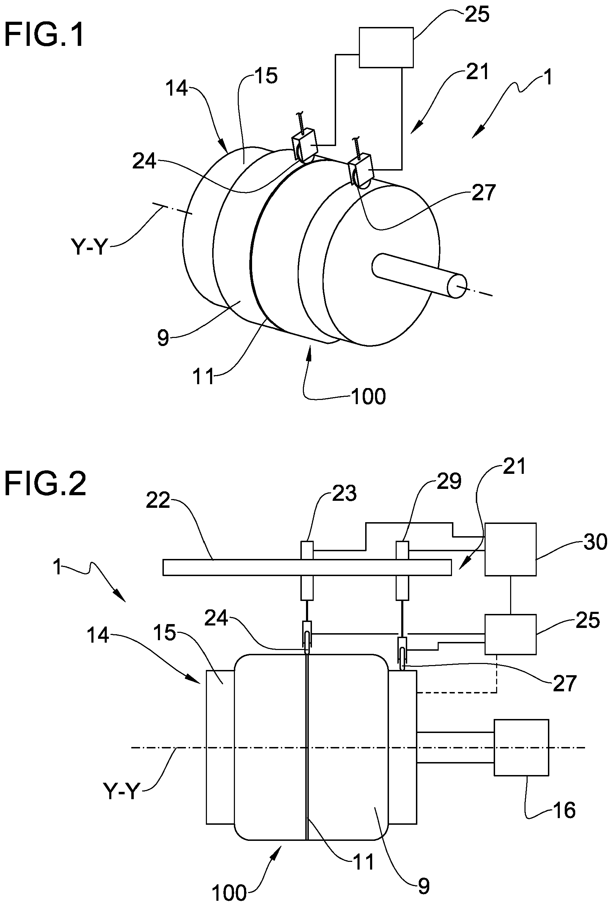

Figure 1 schematically illustrates an apparatus 1 for building tyres 2 for vehicle wheels.

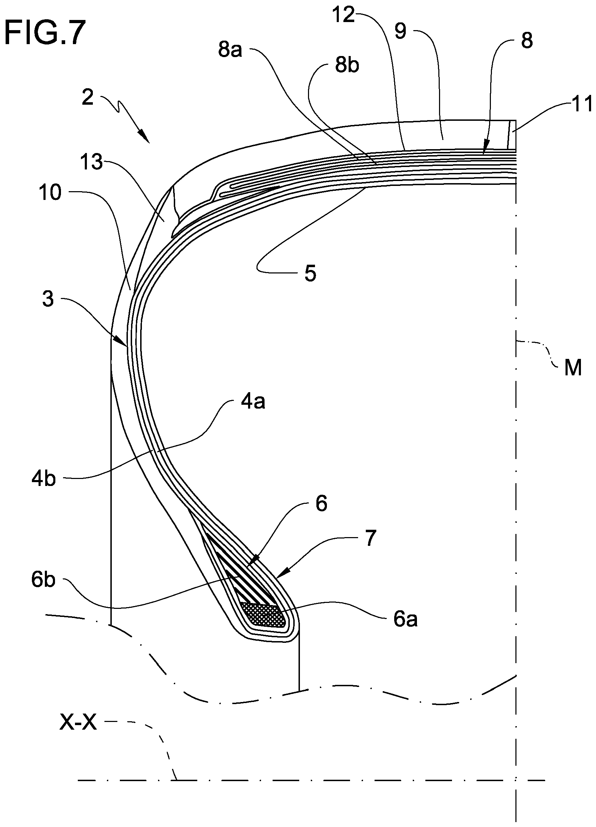

A tyre 2 built with said apparatus 1 is shown in figure 7 and essentially comprises a carcass structure 3 having one/two carcass plies 4a/4a, 4b. An airtight layer of elastomeric material or so-called liner 5 is applied internally to the carcass ply/plies 4a/4a, 4b. Two annular anchoring structures 6 comprising each a so-called bead core 6a bearing an elastomeric filler 6b in radially outer position are engaged to respective end flaps of the carcass ply or plies 4a/ 4a, 4b. The annular anchoring structures 6 are integrated in the proximity of zones usually identified by the name of "beads" 7, at which the engagement between tyre 2 and a respective mounting rim usually occurs. A belt structure 8 comprising for example belt layers 8a, 8b is circumferentially applied around the carcass ply/plies 4a/ 4a, 4b, and a tread band 9 is circumferentially overlapped to the belt structure 8. The belt structure 8 may be associated with so-called "under-belt inserts", not shown, placed each between the carcass ply/plies 4a/4a, 4b and one of the axially opposite end edges of the belt structure 8. Two sidewalls 10, extending each from the respective bead 7 to a corresponding lateral edge of the tread band 9, are applied in laterally opposite positions on the carcass ply/plies 4a/4a, 4b. The portion of each sidewall 10 close to the side edge of the tread band 9 is known as the tyre shoulder.

The tyre 2 has a plane of symmetry "M" (figure 7) equidistant from the respective beads 7 and perpendicular to its axis of rotation "X-X", when tyre 2 is in service.

In the illustrated embodiment, the tyre 2 further comprises a conductive insert 11 and a conductive layer 12. The conductive layer 12 is located in a position radially inner to the tread band 9 and in a position radially outer to the belt layers 8a, 8b. The conductive insert 11 surfaces on a radially outer surface of the tread band 9, passes through the thickness of said tread band 9 and is in contact with the conductive layer 12. The conductive insert 11 is a continuous elongated element embedded in the tread band 9 and extends by a whole circumferential extension of the tread band 9.

The conductive layer 12 extends to axially opposed end portions 13 of the tread band 9 forming part of the sidewalls 10 and preferably made of the same material as said conductive insert 11 and conductive layer 12. The conductive insert 11 may be defined by a protuberance of the conductive layer 12.

The tread 9 is formed of non-conductive elastomeric material which, once vulcanised, may have an electrical resistivity greater than or equal to 10⁴Ω*m at room temperature. The elastomeric material forming the conductive insert 11 and the conductive layer 12 once vulcanised, may have an electrical resistivity less than or equal to 3*10³Ω*m at room temperature. The conductive insert 12 therefore has an electrical conductivity greater than an electrical conductivity of the tread band 9 or an electrical resistance lower than an electrical resistance of the tread band 9.

The conductive insert 11, when the tyre 2 is mounted on a rim to form a wheel and the wheel is mounted on a vehicle, is in contact with the ground and allows discharging the static electricity of the vehicle to the ground through the rim, the bead(s) 7 and other conductive elements of the tyre 2 which electrically connect the bead(s) 7 to the conductive insert 11.

The apparatus 1 is part of a plant for manufacturing tyres 2. The plant, not shown, comprises a production line of the tyres 2 formed by said apparatus 1 for building tyres and by at least one moulding and vulcanisation unit operatively arranged downstream of the apparatus 1. In a preferred but non-exclusive embodiment, the apparatus 1 for building tyres 2 comprises a carcass building line at which the building drums are moved between different stations arranged to form, on each building drum, the carcass structure 3 comprising for example the carcass plies 4a, 4b, the liner 5, the annular anchoring structures 6 and possibly at least a part of the sidewalls 10. At the same time, in a crown building line, one or more building drums are sequentially moved between different work stations arranged to form a crown structure on each building drum, comprising at least the belt structure 8, the tread band 9, and possibly at least a part of the sidewalls 10. In an assembling station, the crown structure is coupled to the carcass structure 3.

The apparatus shown in figure 1 comprises a building drum 14 having a radially outer surface 15 configured for receiving, for example, a crown structure comprising the belt structure 8, the conductive layer 12 and the tread band 9 with the end portions 13 and with the conductive insert 11, i.e. components of a tyre being processed 100.

In this example, the conductive insert 11, the conductive layer 12 and the end portions 13 define a conductive circuit which extends between the radially outer surface of the tread band 9 and the building drum 14. This conductive circuit has an electrical resistivity less than that of the remaining part of the tread band 9 and also of some types of belt structure 8. When the tyre 2 is complete (as in figure 7) this conductive circuit is electrically connected to the carcass plies 4a, 4b and thus to the beads 7. Alternatively, if the belt structure 8 is conductive, the conductive layer 12 may not be present and the conductive insert 11 is directly connected to said belt structure 8.

The radially outer surface 15 of the building drum 14 and preferably also the other parts of said building drum 14 is/are made of conductive material, for example metal.

A motor 16 is connected to the building drum 14 and is configured for rotating the building drum 14 around a central axis Y-Y of said building drum 14.

A deposition device 17 is placed near the radially outer surface of the building drum 14 and is configured for depositing at least one of the components of the tyre 2 being processed around the radially outer surface of the building drum 14 while the motor 16 puts the same in rotation.

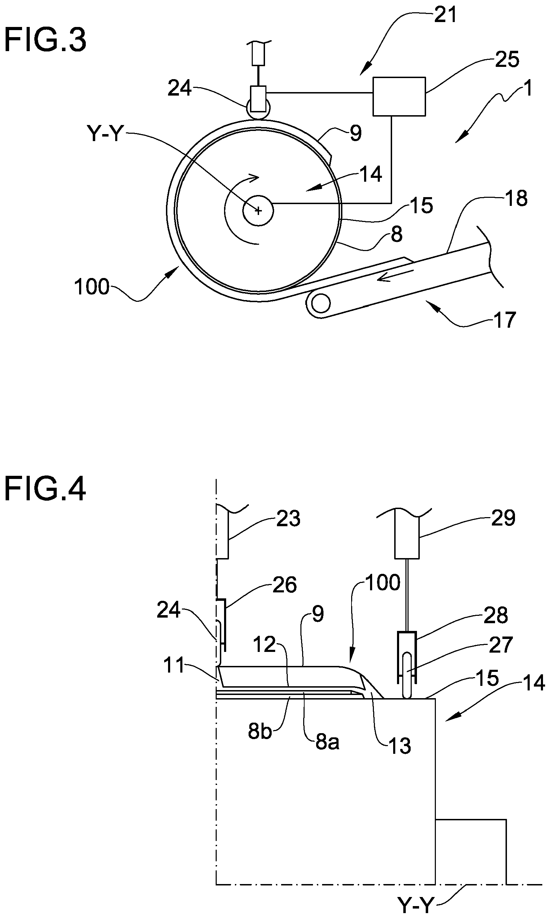

Figure 3 illustrates for example a conveyor belt 18 configured for dispensing and winding the tread band 9 (complete with the conductive layer 12, the end portions 13 and the conductive insert 11) on a radially outer surface of the belt structure 8 previously deposited on the building drum 14. The tread 9 is made to advance on the conveyor belt 18 while the building drum 14 is rotated and is thus wound by 360° around the building drum 14 and around the belt structure 8 until a head mates with a tail of said tread band 9 and said head is joined with said tail.

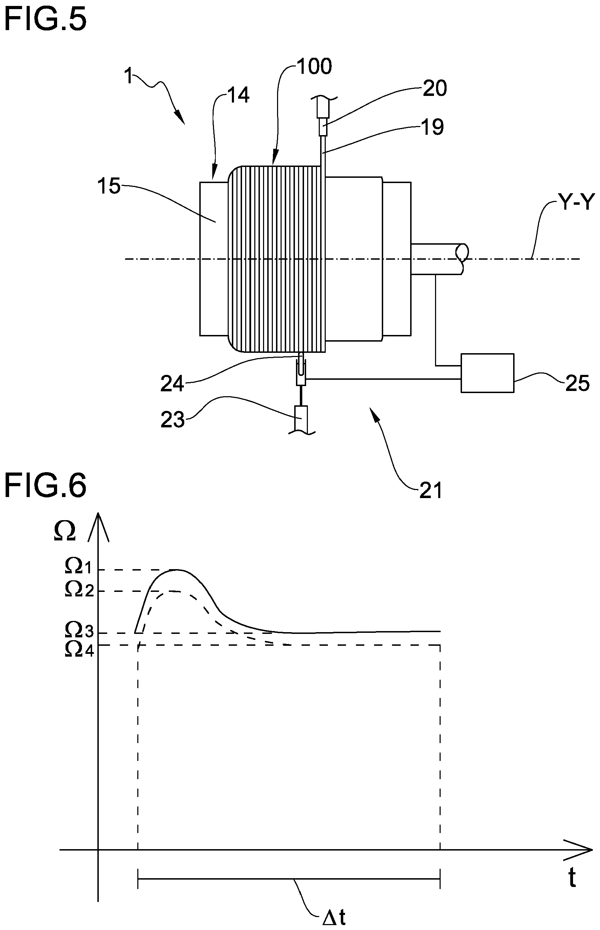

Figure 5 illustrates a variant of the building apparatus/process in which the tread band 9 is formed by winding a continuous elongated element 19, dispensed for example by a mouth 20, in axially juxtaposed and/or partially superposed turns around the building drum 14 and around the belt structure 8.

The apparatus 1 is provided with a device 21 for checking the electrical conductivity of the tyre being processed 100 placed on the building drum 14.

The device 21 for checking the electrical conductivity comprises a frame 22 located in the proximity of the building drum 14 and schematically illustrated in figure 2. The frame 22 carries an actuator 23 of the electric or pneumatic type which at its own end in turn carries a wheel 24 which is free to rotate around a respective axis. The wheel 24 is made of electrically conductive material or at least a radially outer portion of the wheel 24 is made of electrically conductive material, for example made of nickel-coated steel. The wheel 24 is electrically isolated from the frame 22 and is connected to a meter 25 for determining electrical resistances, such as an insulation tester.

The axis of the wheel 24 is parallel to the central axis "Y-Y" of the building drum 14 and the wheel 24 is configured for rolling on the tread band 9 driven by the building drum 14 kept in rotation by the motor 16.

The wheel 24 constitutes an electrode placed in a radially outer position with respect to the radially outer surface 15 of the building drum 14 and facing said radially outer surface 15.

The wheel 24 is rotatably supported by a fork 26 mounted at the end of the actuator 22 and is electrically connected to the meter 25 by means of a sliding brush contact, not shown, interposed between the wheel 24 and the fork 26.

The wheel 24 has for example a diameter of about 80 mm and an axial width of about 10 mm. Moreover, as best seen in figure 4, a profile of the radially outer portion of the wheel 24 is arched to ensure contact with the tread band 9 even if it has concave surface areas.

The actuator 23 is configured for moving the wheel 24 between an operating position, in which the wheel 24 is close to the radially outer surface 15 of the building drum 14, so as to rest against the tread band 9, and a rest position, in which the wheel 24 is spaced from the radially outer surface 15 of the building drum 14.

The actuator 23 is also configured for keeping the wheel 24 against the tread band 9 when it is in the operating position, preferably exerting a pressure of about 1 bar. Alternatively, a weight is configured for pushing the wheel 24 against the tread band 9 when it is in the operating position.

Manual or motorised adjustment devices, not shown, are for example interposed between the actuator 23 and the frame 22 and are configured for moving and axially positioning the wheel 24 according to the type and size of the tyre being processed 100.

For example, if the tread 9 of the tyre being processed 100 is provided with the conductive insert 11 (as in figures 1, 2 and 4), the adjustment devices allow the wheel 24 to be placed at said conductive insert 11 such that it rolls on them.

The meter 25 is operatively connected to the building drum 14 and is configured for generating a voltage between the electrode and the radially outer surface 15 of the building drum 14 and for measuring an electric current between said electrode and said radially outer surface 15, finally determining an electrical resistance.

The radially outer surface 15 constitutes an auxiliary electrode or is connected or electrically connectable to an auxiliary electrode in turn connected to the meter 25. In the embodiment illustrated in figures 1, 2 and 4, the auxiliary electrode comprises an auxiliary wheel 27 structurally similar to the wheel 24 constituting the electrode.

The auxiliary wheel 27 is rotatably supported by a respective auxiliary fork 28 so as to be able to rotate freely around a respective axis parallel to the central axis "Y-Y".

The auxiliary fork 28 is mounted at the end of an auxiliary actuator 29, of the electric or pneumatic type, and is electrically connected to the meter 25 by means of a sliding brush contact, not shown, interposed between the auxiliary wheel 27 and the auxiliary fork 28.

The auxiliary actuator 29 is also supported by the frame 22 and manual or motorised auxiliary adjustment devices, not shown, are for example interposed between the frame 22 and the auxiliary actuator 29, and are configured for moving and axially positioning the auxiliary actuator 29 and the auxiliary wheel 27 depending on the type of tyre being processed 100 and/or of building drum 14.

The auxiliary wheel 27 is located in a position radially outer to the radially outer surface 15 of the building drum 14 and faces said radially outer surface 15. The wheel 24 and the auxiliary wheel 27 are mutually adjacent and mutually axially spaced.

The auxiliary actuator 29 is configured for moving the auxiliary wheel 27 between an operating position, in which the auxiliary wheel 27 rests against an area of the radially outer surface 15 of the building drum 14 free from the tyre being processed 100, and a rest position, in which the auxiliary 27 is spaced from the radially outer surface 15 of the building drum 14.

In the aforementioned operating position, the auxiliary wheel 27 rolls on the radially outer surface 15 of the building drum 14 driven by said building drum 14 in turn kept in rotation by the motor 16.

The auxiliary actuator 29 is also configured for keeping the auxiliary wheel 27 against the radially outer surface 15 when it is in the operating position. Alternatively, a weight is configured for pushing the auxiliary wheel 27 against the radially outer surface 15 when it is in the operating position.

The auxiliary wheel 27 is also made of electrically conductive material or at least a radially outer portion thereof is made of electrically conductive material, for example made of nickel-coated steel. The auxiliary wheel 27 has dimensions similar to those of the wheel 24 with, for example, a diameter of about 80 mm and an axial width of about 10 mm.

An electronic control unit 30, schematically illustrated in figure 2, is connected to the actuator 23, to the auxiliary actuator 29, to the adjustment devices, to the auxiliary adjustment devices, to the motor 16 and to the meter 25 for managing the apparatus 1 for building tyres and the device 21 for checking the electrical conductivity.

For example, the electronic control unit 30 is configured for checking the positions of the wheel 24 and of the auxiliary wheel 27, adjusting the pressure of the wheel 24 against the tread band 9, checking the rotation of the building drum 14 and the meter 25.

In use and according to a method for building tyres for vehicle wheels and to a method for checking the electrical conductivity of a tyre being processed 100 according to the present invention, the tread band 9 is wound around the building drum 14 by rotating the building drum 14 around its central axis "Y-Y", according to what is represented in the embodiment of figure 3 or in the embodiment of figure 5.

During the winding of the tread band 9 (figure 3) or of the continuous elongated element 19 (figure 5), or at the end of such winding, or when the tread band 9 is complete, the electrical conductivity of the tyre being processed 100 is checked.

In the embodiment illustrated in figure 4, the tyre being processed 100 comprises the crown structure comprising in turn the belt structure 8, the conductive layer 12 and the tread band 9 with the end portions 13 and with the conductive insert 11.

In the example of figures 1, 2 and 4, the electrical conductivity is checked when the crown structure is complete.

The wheel 24 and the auxiliary wheel 27 are carried in the respective operating positions. In these positions, the wheel 24 is applied to the radially outer surface of the tread band 9 and at a centre line plane of the tyre being processed 100, so as to rest against a portion of the conductive insert 11 which surfaces on the radially outer surface of the tread band 9. The auxiliary wheel 27 is resting against the radially outer surface 15 of the building drum 14 (figures 1, 2 and 4).

The building drum 14 is rotated about its central axis "Y-Y" so that the wheel 24 rolls on the radially outer surface of the tread band 9 and the auxiliary wheel 27 rolls on the radially outer surface 15 of the building drum 14.

The meter 25 is operated and generates a voltage between the wheel 24 and the auxiliary wheel 27 which is directly in contact with the building drum 14. The meter 25 therefore determines the electrical resistance between the wheel 24 and the auxiliary wheel 27 while the building drum 14 rotates, the wheel 24 rolls against the conductive insert 11 and the auxiliary wheel 27 rolls against the radially outer surface 15 of the building drum 14.

Such a determined electrical resistance is the electrical resistance of the element(s) interposed between the wheel 24 and the auxiliary wheel 27 and therefore is the electrical resistance of the crown structure or is at least a function of the electrical resistance of the crown structure.

Since the conductive insert 11 and other elements of the tyre being processed 100, as specified, have a lower electrical resistivity than others, in particular of the tread band 9, and such as to allow the static electricity of the vehicle to be discharged to the ground, the method according to the invention allows for example checking the presence and/or correct position and/or deposition of the conductive insert 11 in the tread band 9.

More generally, the method allows verifying the presence of the conductive circuits which extend continuously from the radially outer surface of the tread 9 until they come into contact with the radially outer surface 15 of the building drum 14.

For example, it is provided to generate the voltage and determine the electrical resistance by a rotation angle of the building drum 14 around the central axis "Y-Y" fraction of a turn angle, preferably greater than 270°, more preferably for one or more revolutions of the building drum 14 around the central axis "Y-Y" and for a measurement time "Δt" of a few seconds, preferably between 2s and 30s, more preferably between 5s and 10s.

For example, it is provided to generate the voltage and determine the electrical resistance while the building drum 14 is rotated with an angular speed of between 50 rpm and 300 rpm, preferably between 100 rpm and 200 rpm.

For example, the applied voltage may be fixed or variable and between 0 and 5000V with an electrical power between 0 and 5W.

During the generation of the voltage and the determination of the electrical resistance, the wheel 24 is pressed against the tread band 9 by means of the actuator 23 with a pressure of between 0.5 bar and 10 bar to ensure contact.

The meter 25 or the electronic control unit 30 connected to the meter 25 allows obtaining a curve of the electrical resistance/conductivity in the measurement time "t" and/or a value of the electrical resistance/conductivity.

From the aforementioned measurement, a curve of the electrical resistance (in Ω - Ohm) is obtained in the measurement time "Δt", for example illustrated in figure 6 with a dashed line. This electric resistance curve as a function of the measurement time is, for example, compared with a reference curve of the electric resistance, illustrated as a continuous line in figure 6. According to a possible evaluation criterion, if the determined curve is below the reference curve for the whole measurement time "Δt", then the electrical conductivity is acceptable.

Instead of comparing the above curves in their entirety, it is provided to obtain and compare a single determined value of the resistance with a single reference value of the resistance. For example, the determined and reference values are the peak values Ω1, Ω2 of the respective curves (figure 6). Alternatively, the determined and reference values are substantially constant asymptotic values Ω3, Ω4 that the curves assume after an initial transient (figure 6). For example, the reference value of peak electrical resistance Ω1 at room temperature below which the conductivity is acceptable is 2GΩ.

If the curve and/or the electrical resistance determined value is/are not acceptable, the meter 25 or the electronic control unit 30 emits a notification and/or alarm signal and possibly the tyre being processed 100 is automatically discarded.

In the variant shown in figure 3, the auxiliary wheel 27 is not present and the meter 25 is electrically connected in a different way to the building drum 14. This possible alternative connection is shown with a dotted line also in figure 2.

Moreover, in the variant shown in figure 3, the determination of the electrical resistance is performed while the tread band 9 is wound around the building drum 14. In this variant, the wheel 24 is applied against a portion of the tread band 9 just deposited on the building drum 14 while a remaining part of the tread band 9 lies on the conveyor belt 18 and must still be wound around said building drum 14.

In other embodiments, not shown, the electrode and the auxiliary electrode may have structures different from those of the wheel 24 and of the auxiliary wheel 27. For example, the electrode and the auxiliary electrode are configured for sliding against the radially outer surface of the tread band 9 and of the building drum 14, respectively.

## Claims

1. Method for checking the electrical conductivity of a tyre being processed, comprising:
- applying an electrode against a radially outer surface of at least one component of a tyre being processed (100) wound around a building drum (14);
- generating a voltage between the electrode and the building drum (14) and determining an electrical resistance between said electrode and said building drum (14) while the electrode rests against said radially outer surface.

2. Method as claimed in claim 1, comprising:
- rotating the building drum (14) together with said at least one component around a central axis (Y-Y) of the building drum (14);
- generating the voltage and determining the electrical resistance while the building drum (14) rotates together with said at least one component.

3. Method as claimed in any one of claims 1 or 2, wherein said at least one component comprises a tread band (9).

4. Method as claimed in any one of claims 1 to 3, wherein said at least one component comprises a belt structure (8).

5. Method as claimed in claim 3 or 4 when dependent on claim 3, wherein the tread band (9) comprises a conductive insert (11) configured for surfacing on the radially outer surface; wherein the electrode is placed at an axial position provided for said conductive insert (11).

6. Method as claimed in any one of claims 1 to 5, wherein the electrode rolls or slides against the radially outer surface of said at least one component.

7. Method as claimed in any one of claims 1 to 6, wherein the electrode exerts against the radially outer surface of said at least one component a pressure greater than or equal to 0.5 bar and less than or equal to 10 bar.

8. Method as claimed in any one of claims 1 to 7, comprising: applying an auxiliary electrode against the building drum (14) or against a portion electrically connected to the building drum (14) and generating the voltage determining the electric resistance between said electrode and said auxiliary electrode.

9. Process for building tyres for vehicle wheels, comprising:
- depositing components of a tyre being processed (100) around at least one building drum (14) by rotating the building drum (14) around a central axis (Y-Y) of said building drum (14);
- checking the electrical conductivity of the tyre being processed (100) through the method of one of claims 1 to 8.

10. Apparatus for building tyres for vehicle wheels, comprising:
- at least one building drum (14) having a radially outer surface (15) configured for receiving components of a tyre being processed (100);
- a motor (16) connected or connectable to the building drum (14) and configured for rotating the building drum (14) around a central axis (Y-Y) of said building drum (14);
- at least one deposition device (17) placed near the radially outer surface (15) of the building drum (14) and configured for depositing at least one of the components of the tyre being processed (100) around the radially outer surface (15) of the building drum (14) while the motor (16) puts the same in rotation;
- a device (21) for checking the electrical conductivity of a tyre being processed (100), comprising:
an electrode placed in a position radially outer to the radially outer surface (15) of the building drum (14) and facing said radially outer surface (15) of the building drum (14);
a meter (25) operatively connected to the electrode and to the building drum (14) and configured for generating a voltage between the electrode and the building drum (14), for determining an electrical resistance between the electrode and the building drum (14).

11. Apparatus as claimed in claim 10, wherein, in at least one operating position, the electrode is close to the radially outer surface (15) of the building drum (14) so as to rest against said at least one of the components of the tyre being processed (100); wherein the apparatus further comprises an actuator (23) connected to the electrode and configured for moving the electrode between the operating position and a position spaced from the radially outer surface (15) of the building drum (14).

12. Apparatus as claimed in any one of claims 10 or 11, wherein the electrode comprises a wheel (24) of electrically conductive material configured for rolling on said at least one component.

13. Apparatus as claimed in any one of claims 10 to 12, wherein the device (21) for checking the electrical conductivity comprises:
a frame (22), the electrode being mounted on said frame (22);
adjustment devices operatively arranged between the frame (22) and the electrode and configured for moving and position the electrode axially according to the type of tyre being processed (100).

14. Apparatus as claimed in any one of claims 10 to 13, wherein the device (21) for checking the electrical conductivity comprises an auxiliary electrode electrically connected or connectable to the building drum (14); the meter (25) being operatively connected to the auxiliary electrode.

15. Apparatus as claimed in claim 14, wherein the auxiliary electrode is placed side by said to the electrode and axially spaced from said electrode.

## Patentansprüche

1. Verfahren zur Prüfung der elektrischen Leitfähigkeit eines zu bearbeitenden Reifens, umfassend:
- Anlegen einer Elektrode an eine radiale Außenfläche von mindestens einer Komponente eines zu bearbeitenden Reifens (100), der um eine Aufbautrommel (14) gewickelt ist;
- Erzeugen einer Spannung zwischen der Elektrode und der Aufbautrommel (14) und Bestimmen eines elektrischen Widerstandes zwischen der Elektrode und der Aufbautrommel (14), während die Elektrode an der radialen Außenfläche anliegt.

2. Verfahren nach Anspruch 1, umfassend:
- Drehen der Aufbautrommel (14) zusammen mit der mindestens einen Komponente um eine Mittelachse (Y-Y) der Aufbautrommel (14);
- Erzeugen der Spannung und Bestimmen des elektrischen Widerstands, während die Aufbautrommel (14) zusammen mit dem mindestens einen Bauteil rotiert.

3. Verfahren nach einem der Ansprüche 1 oder 2, wobei die mindestens eine Komponente ein Laufflächenband (9) umfasst.

4. Verfahren nach einem der Ansprüche 1 bis 3, wobei die mindestens eine Komponente eine Gürtelstruktur (8) umfasst.

5. Verfahren nach Anspruch 3 oder 4 in Abhängigkeit von Anspruch 3, wobei das Laufflächenband (9) einen leitenden Einsatz (11) umfasst, der so konfiguriert ist, dass er auf der radialen Außenfläche aufliegt; wobei die Elektrode an einer für den leitenden Einsatz (11) vorgesehenen axialen Position angeordnet ist.

6. Verfahren nach einem der Ansprüche 1 bis 5, wobei die Elektrode an der radialen Außenfläche des mindestens einen Bauteils abrollt oder gleitet.

7. Verfahren nach einem der Ansprüche 1 bis 6, wobei die Elektrode auf die radiale Außenfläche des mindestens einen Bauteils einen Druck von größer oder gleich 0,5 bar und kleiner oder gleich 10 bar ausübt. Verfahren nach einem der Ansprüche 1 bis 5, wobei die Elektrode an der radialen Außenfläche des mindestens einen Bauteils abrollt oder gleitet.

8. Verfahren nach einem der Ansprüche 1 bis 7, umfassend: Anlegen einer Hilfselektrode an die Aufbautrommel (14) oder an einen mit der Aufbautrommel (14) elektrisch verbundenen Teil und Erzeugen der Spannung, die den elektrischen Widerstand zwischen der Elektrode und der Hilfselektrode bestimmt.

9. Verfahren zur Fertigung von Reifen für Fahrzeugräder, umfassend:
Ablegen von Bauteilen eines zu bearbeitenden Reifens (100) um mindestens eine Aufbautrommel (14) durch Drehen der Aufbautrommel (14) um eine Mittelachse (Y-Y) der Aufbautrommel (14);
- Prüfen der elektrischen Leitfähigkeit des zu bearbeitenden Reifens (100) durch das Verfahren nach einem der Ansprüche 1 bis 8.

10. Vorrichtung zur Herstellung von Reifen für Fahrzeugräder, umfassend:
- -mindestens eine Aufbautrommel (14) mit einer radialen Außenfläche (15), die zur Aufnahme von Bauteilen eines zu bearbeitenden Reifens (100) ausgebildet ist;
- einen Motor (16), der mit der Aufbautrommel (14) verbunden oder verbindbar ist und zum Drehen der Aufbautrommel (14) um eine zentrale Achse (Y-Y) der Aufbautrommel (14) konfiguriert ist;
- mindestens eine Ablagevorrichtung (17), die in der Nähe der radialen Außenfläche (15) der Aufbautrommel (14) angeordnet ist und so konfiguriert ist, dass sie mindestens eines der Bauteile des zu bearbeitenden Reifens (100) um die radiale Außenfläche (15) der Aufbautrommel (14) ablagert, während der Motor (16) diese in Drehung versetzt;
Verfahren zur Prüfung der elektrischen Leitfähigkeit eines zu bearbeitenden Reifens, umfassend:
eine Elektrode, die in einer Position radial außerhalb der radialen Außenfläche (15) der Aufbautrommel (14) angeordnet ist und der radialen Außenfläche (15) der Aufbautrommel (14) zugewandt ist;
ein Messgerät (25), das betriebsmäßig mit der Elektrode und der Aufbautrommel (14) verbunden ist und zum Erzeugen einer Spannung zwischen der Elektrode und der Aufbautrommel (14) konfiguriert ist, um einen elektrischen Widerstand zwischen der Elektrode und der Aufbautrommel (14) zu bestimmen.

11. Vorrichtung nach Anspruch 10, wobei sich die Elektrode in mindestens einer Betriebsposition nahe der radialen Außenfläche (15) der Aufbautrommel (14) befindet, so dass sie an der mindestens einem der Bauteile des zu bearbeitenden Reifens (100) anliegt; wobei die Vorrichtung ferner einen Aktuator (23) umfasst, der mit der Elektrode verbunden und zum Bewegen der Elektrode zwischen der Betriebsposition und einer von der radialen Außenfläche (15) der Aufbautrommel (14) beabstandeten Position konfiguriert ist.

12. Vorrichtung nach einem der Ansprüche 10 oder 11, wobei die Elektrode ein Rad (24) aus elektrisch leitfähigem Material umfasst, das zum Rollen auf dem mindestens einen Bauteil konfiguriert ist.

13. Vorrichtung nach einem der Ansprüche 10 bis 12, wobei die Vorrichtung (21) zur Überprüfung der elektrischen Leitfähigkeit umfasst:
einen Rahmen (22), wobei die Elektrode an dem Rahmen (22) befestigt ist;
Einstellvorrichtungen, die funktionsmäßig zwischen dem Rahmen (22) und der Elektrode angeordnet und so konfiguriert sind, dass sie die Elektrode axial entsprechend dem Typ des zu bearbeitenden Reifens (100) bewegen und positionieren.

14. Vorrichtung nach einem der Ansprüche 10 bis 13, wobei die Vorrichtung (21) zur Überprüfung der elektrischen Leitfähigkeit eine Hilfselektrode umfasst, die mit der Aufbautrommel (14) elektrisch verbunden oder verbindbar ist; wobei das Messgerät (25) mit der Hilfselektrode betriebsmäßig verbunden ist.

15. Vorrichtung nach Anspruch 14, bei der die Hilfselektrode neben der Elektrode und in axialem Abstand von dieser angeordnet ist.

## Revendications

1. Procédé de contrôle de la conductivité électrique d'un pneu en cours de traitement, comprenant :
- l'application d'une électrode contre une surface radialement externe d'au moins un composant d'un pneu en cours de traitement (100) enroulé autour d'un tambour de construction (14) ;
- la génération d'une tension entre l'électrode et le tambour de construction (14) et la détermination d'une résistance électrique entre ladite électrode et ledit tambour de construction (14) tandis que l'électrode repose contre ladite surface radialement externe.

2. Procédé tel que revendiqué dans la revendication 1, comprenant :
- la rotation du tambour de construction (14) conjointement avec ledit au moins un composant autour d'un axe central (Y-Y) du tambour de construction (14) ;
- la génération de la tension et la détermination de la résistance électrique tandis que le tambour de construction (14) tourne conjointement avec ledit au moins un composant.

3. Procédé tel que revendiqué dans l'une quelconque des revendications 1 ou 2, dans lequel ledit au moins un composant comprend une bande de roulement (9).

4. Procédé tel que revendiqué dans l'une quelconque des revendications 1 à 3, dans lequel ledit au moins un composant comprend une structure de ceinture (8).

5. Procédé tel que revendiqué dans la revendication 3 ou 4 lorsqu'elle dépend de la revendication 3, dans lequel la bande de roulement (9) comprend un insert conducteur (11) configuré pour un surfaçage sur la surface radialement externe ; dans lequel l'électrode est placée dans une position axiale prévue pour ledit insert conducteur (11).

6. Procédé tel que revendiqué dans l'une quelconque des revendications 1 à 5, dans lequel l'électrode roule ou glisse contre la surface radialement externe dudit au moins un composant.

7. Procédé tel que revendiqué dans l'une quelconque des revendications 1 à 6, dans lequel l'électrode exerce contre la surface radialement externe dudit au moins un composant une pression supérieure ou égale à 0,5 bar et inférieure ou égale à 10 bar.

8. Procédé tel que revendiqué dans l'une quelconque des revendications 1 à 7, comprenant : l'application d'une électrode auxiliaire contre le tambour de construction (14) ou contre une partie électriquement connectée au tambour de construction (14) et la génération de la tension déterminant la résistance électrique entre ladite électrode et ladite électrode auxiliaire.

9. Procédé de construction de pneus pour roues de véhicules, comprenant :
- le dépôt de composants d'un pneu en cours de traitement (100) autour d'au moins un tambour de construction (14) en faisant tourner le tambour de construction (14) autour d'un axe central (Y-Y) dudit tambour de construction (14) ;
- le contrôle de la conductivité électrique du pneu en cours de traitement (100) par le procédé de l'une des revendications 1 à 8.

10. Appareil de construction de pneus pour roues de véhicules, comprenant :
- au moins un tambour de construction (14) ayant une surface radialement externe (15) configurée pour recevoir des composants d'un pneu en cours de traitement (100) ;
- un moteur (16) connecté ou pouvant être connecté au tambour de construction (14) et configuré pour faire tourner le tambour de construction (14) autour d'un axe central (Y-Y) dudit tambour de construction (14) ;
- au moins un dispositif de dépôt (17) placé à proximité de la surface radialement externe (15) du tambour de construction (14) et configuré pour déposer au moins un des composants du pneu en cours de traitement (100) autour de la surface radialement externe (15) du tambour de construction (14) tandis que le moteur (16) le met en rotation ;
- un dispositif (21) pour contrôler la conductivité électrique d'un pneu en cours de traitement (100), comprenant :
une électrode placée dans une position radialement extérieure à la surface radialement externe (15) du tambour de construction (14) et faisant face à ladite surface radialement externe (15) du tambour de construction (14) ;
un compteur (25) connecté de manière fonctionnelle à l'électrode et au tambour de construction (14) et configuré pour générer une tension entre l'électrode et le tambour de construction (14), pour déterminer une résistance électrique entre l'électrode et le tambour de construction (14).

11. Appareil tel que revendiqué dans la revendication 10, dans lequel, dans au moins une position de fonctionnement, l'électrode est proche de la surface radialement externe (15) du tambour de construction (14) de manière à reposer contre ledit au moins un des composants du pneu en cours de traitement (100) ; dans lequel l'appareil comprend en outre un actionneur (23) connecté à l'électrode et configuré pour déplacer l'électrode entre la position de fonctionnement et une position espacée de la surface radialement externe (15) du tambour de construction (14).

12. Appareil tel que revendiqué dans l'une quelconque des revendications 10 ou 11, dans lequel l'électrode comprend une roue (24) en matériau électriquement conducteur configurée pour rouler sur ledit au moins un composant.

13. Appareil tel que revendiqué dans l'une quelconque des revendications 10 à 12, dans lequel le dispositif (21) de contrôle de la conductivité électrique comprend :
un cadre (22), l'électrode étant montée sur ledit cadre (22) ;
des dispositifs de réglage agencés de manière fonctionnelle entre le cadre (22) et l'électrode et configurés pour déplacer et positionner axialement l'électrode en fonction du type de pneu en cours de traitement (100).

14. Appareil tel que revendiqué dans l'une quelconque des revendications 10 à 13, dans lequel le dispositif (21) de contrôle de la conductivité électrique comprend une électrode auxiliaire connectée ou pouvant être connectée électriquement au tambour de construction (14) ; le compteur (25) étant connecté de manière fonctionnelle à l'électrode auxiliaire.

15. Appareil tel que revendiqué dans la revendication 14, dans lequel l'électrode auxiliaire est placée côte à côte avec l'électrode et espacée axialement de ladite électrode.
